# FASCICULE DE BREVET EUROPEEN

(11) **EP 1 013 936 B1**
(45) Date de publication et mention de la délivrance du brevet: **12.04.2006**
(21) Numéro de dépôt: 99403238.1
(22) Date de dépôt: 21.12.1999
(51) Int. Cl.: F04D 15/00, F16K 15/14, F04D 9/00

(54) **Clapet d'amorcage pour pompe autoamorcante**
Rückschlagventil für selbstansaugende Pumpe
Check-valve for self-priming pump

(30) Priorité: 21.12.1998 FR 9816150
(43) Date de publication de la demande: 28.06.2000
(73) Titulaire: Pompes Salmson, 92500 Rueil Malmaison (FR)
(72) Inventeur: Houizot, Pierre-Yves, 53970 L'Huisserie (FR)
(74) Mandataire: Desrousseaux, Grégoire Marie

(56) Documents cités:
- WO-A-93/14336
- DE-A- 4 415 157
- FR-A- 2 673 686
- GB-A- 321 510
- US-A- 1 618 671

## Description

La présente invention concerne le domaine des pompes, et plus particulièrement des pompes autoamorçantes.

Ces pompes autoamorçantes peuvent, du fait de leur structure particulière, démarrer sans devoir être disposées plus bas que le liquide à pomper, autrement dit avec une conduite d'aspiration vide d'eau; cette structure assure que le corps de pompe, avant son démarrage, contient un volume d'eau suffisant au démarrage pour assurer la fonction d'autoamorçage. Ce volume d'eau reste dans le corps de pompe lorsqu'elle est arrêtée et permet d'amorcer la pompe lorsqu'elle est démarrée de nouveau. L'amorçage de la pompe est aussi assuré par un clapet disposé entre la partie d'aspiration et la partie de refoulement de la pompe, qui reste ouvert lors de l'amorçage de la pompe, et se ferme après la fin de la phase d'amorçage. L'ouverture du clapet lors de la phase d'amorçage permet de refouler essentiellement de l'air, jusqu'à avoir aspiré du liquide du côté aspiration de la pompe. A ce moment, le clapet se ferme, et la pompe a le même fonctionnement qu'une pompe classique.

Il existe des pompes autoamorçantes horizontales, c'est-à-dire dont l'axe de rotation du rotor est disposé horizontalement en fonctionnement de la pompe. De telles pompes sont par exemple commercialisées par les sociétés Leader Pumps ou KSB, sous les références Ecoplus ou Multieco. Ces pompes connues présentent un orifice d'aspiration situé dans la partie supérieure du corps de pompe, de sorte que le corps de pompe reste empli d'eau à l'arrêt de la pompe. Elles présentent un orifice de refoulement qui est disposé sur le dessus du corps de pompe. Une telle pompe est aussi commercialisée par la demanderesse sous la référence STARSON. Cette pompe permet notamment de démarrer, avec une conduite d'aspiration reliée au côté d'aspiration de la pompe qui présente un dénivelé de 8 mètres.

Le document WO-A-93 14336 décrit une pompe. La pompe comporte un clapet comportant un siège percé d'un orifice et une lame élastique. La lame est montée de manière à pouvoir être appliqué sur le siège devant l'orifice ; la lame est encastrée d'un côté et sa flexibilité croît du côté encastrée à l'extrémité opposée à ce côté.

L'invention concerne le clapet d'amorçage d'une telle pompe. Elle propose un clapet d'amorçage qui est d'un montage facile lors de l'assemblage de la pompe, qui présente une grande fiabilité, et s'ouvre et se ferme dans des conditions prédéterminées précises et reproductibles.

Elle propose aussi un corps d'étage destiné à recevoir un tel clapet, et définissant pour le clapet un siège adapté.

Plus précisément, l'invention propose un clapet d'amorçage, comprenant un support de clapet présentant un alésage de clapet et des mâchoires, ainsi qu'une plaque en matériau élastique maintenue par ses extrémités dans les mâchoires, la plaque en l'absence de sollicitation présentant une cambrure qui l'écarte du siège de l'alésage.

Avantageusement, il existe un jeu entre le fond des mâchoires et les extrémités de la plaque.

De préférence, le siège présente une forme cylindrique.

Dans un mode de réalisation, le support de clapet présente au moins un ergot de positionnement de la plaque sur sa face opposée à l'alésage de clapet.

Avantageusement, les ouvertures des mâchoires et l'ergot de positionnement sont disposés sur un cercle.

De préférence, les mâchoires bloquent la plaque sur trois côtés. Cette plaque peut être une plaque en caoutchouc, une plaque en acier, ou une plaque en plastique.

L'invention concerne aussi une pompe autoamorçante comprenant un tel clapet.

Dans un mode de réalisation, cette pompe comprend une pièce adjacente au support de clapet, la dite pièce comprenant une surface bloquant la plaque dans les mâchoires.

De préférence, le support de clapet est ménagé sur un corps d'étage, et la pièce est un corps de pompe, ou une cellule d'aspiration adjacent au corps d'étage.

L'invention propose enfin un support de clapet d'amorçage pour une pompe autoamorçante, comprenant un alésage de clapet et des mâchoires, dans lequel les ouvertures des mâchoires sont disposés sur une ligne courbe, de préférence sur un cercle.

Il est aussi avantageux de prévoir au moins un ergot de positionnement, les ouvertures des mâchoires et l'ergot de positionnement étant disposés sur ladite ligne courbe.

De préférence, le siège présente une forme cylindrique.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation schématique en coupe axiale d'une pompe autoamorçante présentant un clapet selon l'invention;
- figure 2 une représentation schématique radiale d'un clapet selon l'art antérieur;
- figure 3 une représentation schématique radiale d'un support de clapet selon invention;
- figure 4 une représentation schématique radiale d'un support de clapet et d'un clapet selon l'invention..

L'invention propose, dans une pompe autoamorçante, un clapet d'amorçage qui résout le problème nouveau de montage du clapet, et assure en même temps que ce clapet se ferme et s'ouvre dans des conditions reproductibles.

Dans la suite de la description, l'invention est décrite dans le cas d'une pompe multi-étages, dans laquelle le clapet est monté sur le dernier corps d'étage. Cet exemple de réalisation fournit une pompe particulièrement efficace, mais n'est pas le seul mode de réalisation possible de l'invention.

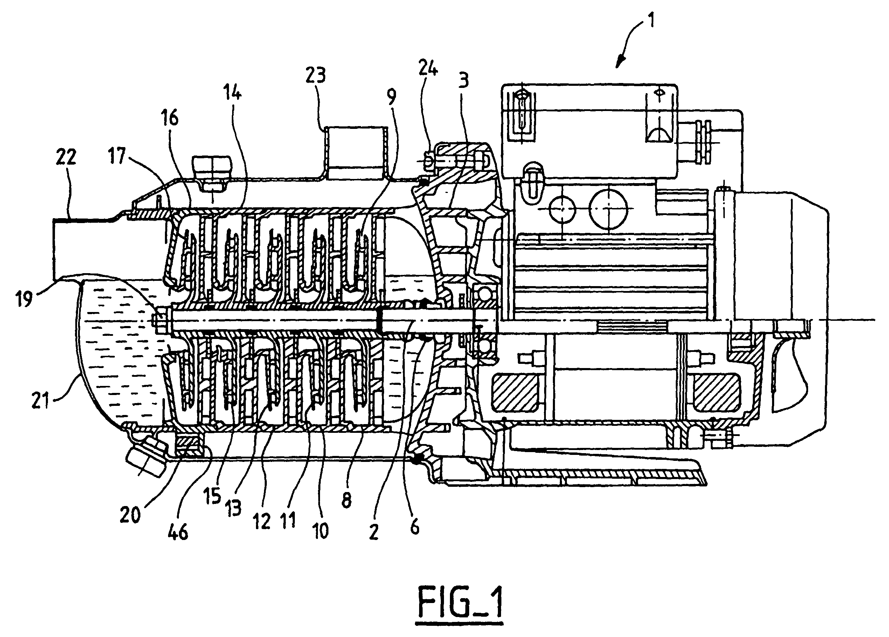

La figure 1 montre une représentation schématique en coupe axiale d'une pompe autoamorçante présentant un clapet selon l'invention; on reconnaît sur la figure le moteur de pompe 1, qui n'est pas décrit plus en détail. Ce moteur entraîne en rotation un arbre 2. Sur le moteur est fixée une lanterne support moteur 3, en plastique moulé, qui sert de paroi latérale à la zone d'aspiration 4 et à la zone de refoulement 5 de la pompe.

La lanterne support 3 est traversée par l'arbre 2 du moteur; à la traversée est disposée une garniture mécanique 6 qui assure l'étanchéité de la pompe.

La pompe de la figure comprend ensuite le long de l'arbre une pluralité d'étages - cinq dans le cas de la figure, qui sont chacun constitués d'un corps d'étage 8, 10, 12, 14 et 16 et d'une roue 9, 11, 13, 15 et 17. Comme le montre la figure, les corps d'étage sont superposés et disposés contre la lanterne support; les roues sont intercalées avec les corps d'étage, et sont superposées le long de l'arbre du moteur. Un écrou 19 assure la fixation axiale des roues sur l'arbre.

Le dernier corps d'étage 16 - c'est-à-dire celui qui est le plus éloigné du moteur - présente un clapet d'amorçage 20. Ce clapet, comme expliqué plus haut, est ouvert lors de l'amorçage de la pompe et se referme en fonctionnement normal de la pompe; lors de l'amorçage de la pompe, il met en communication la zone d'aspiration 4 et à la zone de refoulement 5 de la pompe, de sorte à ne refouler que principalement de l'air. Lorsque la pompe est amorcée, i. e. lorsque la conduite reliée à l'orifice d'aspiration de la pompe est pleine de liquide, la pression augmente dans la zone de refoulement de la pompe, et le clapet se referme. La pompe fonctionne alors comme une pompe classique.

Un corps de pompe, par exemple un corps de pompe 21 en métal embouti présentant des orifices d'aspiration 22 et de refoulement 23 soudés, est fixé sur la lanterne support moteur 3. Dans le mode de réalisation de la figure, la lanterne et le corps de pompe sont fixés l'une à l'autre et fixés sur le moteur par des écrous ou vis 24. Le corps de pompe maintient en position les différents corps d'étage. La position de l'orifice d'aspiration dans la partie supérieure du corps de pompe assure que la pompe reste remplie d'eau même lorsqu'elle est arrêtée.

L'assemblage de la pompe de la figure 1 s'effectue simplement par montage de la lanterne, puis de la garniture. On monte ensuite les corps d'étage, et les roues correspondantes. Après avoir fixé les roues sur l'arbre grâce à l'écrou, on peut monter et fixer le corps de pompe.

En outre, le dernier corps d'étage et le corps de pompe présentent des moyens de détrompage, typiquement des détrompeurs comme des ergots ou autres, qui assurent un montage du dernier corps d'étage dans une position radiale correcte par rapport au corps de pompe. Plus précisément, les moyens de détrompage assurent que le clapet 20 se trouve du côté opposé à l'orifice d'aspiration 22. De la sorte, une fois la pompe en position de fonctionnement, l'orifice 22 se trouve vers le haut, et permet de maintenir une quantité d'eau nécessaire à l'amorçage dans le corps de pompe; le clapet se trouve dans la partie inférieure de la pompe, et se referme ainsi plus rapidement lors de la montée en pression côté refoulement. L'orifice de refoulement du corps de pompe se trouve vers le haut, de sorte à refouler essentiellement de l'air lors de l'amorçage de la pompe.

Dans une telle pompe, différents problèmes se posent pour le clapet d'amorçage. Il est important que le clapet d'amorçage s'ouvre et se ferme pour des valeurs de pression déterminées et reproductibles. Le fait que le clapet s'ouvre ou se ferme pour des pressions faibles assure que la pompe une fois amorcée présente un rendement correct.

Il est aussi avantageux que le clapet soit d'un montage simple, et que le montage du clapet n'influe pas sur les valeurs de pression pour lesquelles le clapet s'ouvre et se ferme; de la sorte, on peut assurer une fabrication reproductible des pompes.

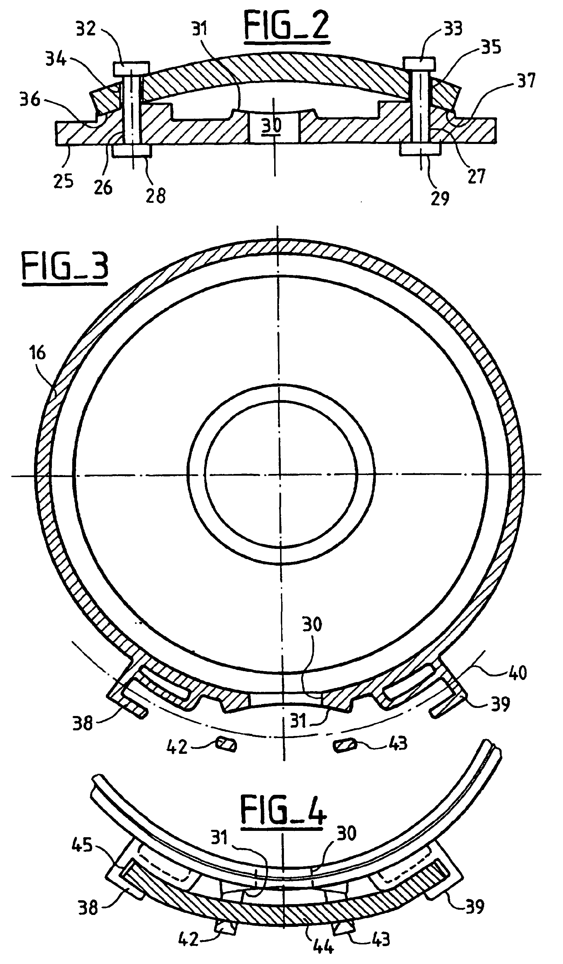

La figure 2 montre une représentation schématique radiale d'un clapet de l'art antérieur, tel qu'il est monté dans la pompe vendue par la demanderesse sous la référence STARSON. La figure montre d'une part le support de clapet 25, qui dans la pompe de l'art antérieur n'est pas constitué par une partie du corps d'étage. Ce support de clapet présente deux alésages 26 et 27 pour recevoir des boulons 28 et 29 de fixation du clapet. Elle présente aussi un alésage de clapet 30, qui permet le passage de l'eau lorsque le clapet est ouvert. Le support de clapet est obtenu par moulage d'un matériau plastique.

Le clapet est formé d'une plaque en un matériau élastique - par exemple du caoutchouc éthylène propylène - qui est fixée sur le support de clapet par les boulons 28 et 29, et par des écrous associés 32 et 33. Du côté de montage de la plaque, le support de clapet est muni, autour de l'alésage de clapet d'un siège de clapet 31, qui présente une forme de cylindre.

La plaque en caoutchouc est montée sur le support de clapet avec une cambrure, de sorte qu'en position de repos, elle ne s'appuie pas sur le siège du support de clapet. Cette cambrure est simplement obtenue par la forme de la plaque de caoutchouc utilisé pour le clapet; il suffit pour former cette cambrure de ménager dans la plaque de caoutchouc des trous de montage 34 et 35, dont l'entraxe est plus important que l'entraxe entre les alésages 26 et 27 ménagés dans le support de clapet pour les boulons de fixation. En outre, on notera que le support de clapet présente au voisinage des alésages 26 et 27, du côté du clapet, des surfaces d'appui 36 et 37 incurvées, qui contribuent à donner au clapet sa cambrure.

Ainsi, en position de repos, le clapet est ouvert du fait de la cambrure de la plaque de caoutchouc; il permet alors le passage de l'air vers la zone de refoulement de la pompe, et le passage de l'eau vers la zone d'aspiration. Lorsque la pression dans la zone de refoulement - du côté du clapet - augmente, le clapet se déforme, et vient s'appliquer contre le siège: la convexité de la partie centrale du clapet s'inverse, et est dirigée vers le haut, et la face inférieure du clapet vient s'appuyer contre la surface du siège.

Le clapet de l'art antérieur donne satisfaction en fonctionnement, et assure un bon fonctionnement des pompes autoamorçantes commercialisées par la demanderesse. Toutefois, son montage n'est pas aisé et rapide. Il est en effet nécessaire de fixer la plaque formant clapet, à l'aide de deux boulons et deux écrous; en outre, ce mode de fixation n'est pas très précis, de sorte que la distance au repos entre le clapet et le siège du clapet doit être vérifiée, pour assurer une fermeture du clapet de la pompe à une pression appropriée.

L'invention a pour objet une solution à ce problème nouveau. La figure 3 montre une représentation schématique en coupe radiale d'un support de clapet selon l'invention, dans le plan contenant l'axe de l'alésage de clapet. Dans le mode de réalisation de la figure 3, le support de clapet est ménagé sur un corps d'étage, de préférence sur le dernier corps d'étage 16 adjacent au corps de pompe. On reconnaît sur la figure 3 l'alésage de clapet 30, et le siège 31 Comme dans l'art antérieur, ce siège présente avantageusement une forme cylindrique.

Comme le montre la figure 4, la plaque du clapet - appelée aussi abusivement "le clapet" - est simplement maintenue dans le corps d'étage par des mâchoires; en outre des ergots de positionnement peuvent être prévus pour assurer que la plaque reste à une distance constante du siège en position ouverte. On reconnaît sur la figure 3 les mâchoires 38 et 39, qui sont destinées à recevoir les extrémités de la plaque formant le clapet. Ces mâchoires définissent chacune une ouverture, d'une taille sensiblement égale à l'épaisseur de la plaque élastique formant le clapet, au jeu de montage près. La profondeur de chaque ouverture est suffisante pour assurer le maintien de la plaque; une longueur de l'ordre de 10 mm est appropriée pour une plaque d'une longueur de l'ordre de 80 mm. Les ouvertures de chacune des mâchoires sont disposées sur une ligne courbe 40 - dans l'exemple un cercle - correspondant au plan médian de la plaque en position de repos, de sorte à lui donner sa cambrure.

Le support de clapet de la figure 3 peut aussi présenter deux ergots de positionnement 42 et 43, qui sont disposés au voisinage de l'orifice de clapet, et qui sont destinés à venir en contact avec la face de la plaque élastique du côté opposé au siège du clapet. La présence des ergots assure une bonne position de la plaque en position de repos, la plaque venant alors s'appuyer contre les clapets. En outre, la présence des ergots empêche toute sortie accidentelle de la plaque de son support. La forme des ergots de positionnement - en triangle - assure que la surface de contact des ergots avec la plaque est une droite, ce qui limite les risques de collage de la plaque sur les ergots.

La figure 4 montre une représentation schématique radiale d'un support de clapet et d'une plaque de clapet selon l'invention. On y reconnaît les différents éléments de la figure 3, avec en outre la plaque 44 de matériau élastique ou plaque élastique formant le clapet. La plaque peut être une plaque en caoutchouc; on peut aussi utiliser une plaque en acier inoxydable souple, ou une plaque en acier à ressort, ou encore une plaque en plastique. Comme le montre la figure, les extrémités de la plaque sont engagées dans les ouvertures des mâchoires, et la face de la plaque vient au contact des ergots de positionnement.

Avantageusement, il existe un jeu longitudinal ou orthoradial entre les bords de la plaque 44 et le fond des ouvertures des mâchoires, jeu référencé 45 sur la figure 4 pour la mâchoire 38. Ce jeu assure que la plaque 44 ne subit pas de contraintes dans le sens orthoradial, et que la position de la plaque est uniquement déterminée par l'angle des ouvertures des mâchoires et le cas échéant par le ou les ergots de positionnement. Ce jeu, et l'absence de sollicitations dans le sens orthoradial sur la plaque assure en outre que la pression de fermeture du clapet est toujours identique, et ne dépend pas de la façon dont la plaque est montée.

Le clapet des figures 3 et 4 est d'un montage particulièrement simple. Il suffit en effet, avant de monter le corps de pompe, de glisser dans le logement du support de clapet la plaque en matériau élastique, dans le sens axial. Comme le montre la figure 1, les mâchoires comme les ergots de positionnement ne sont ouverts que d'un côté, et présentent un fond 46 qui assure le blocage axial de la plaque. Il n'est pas nécessaire de fixer des vis ou des boulons. La position de la plaque est déterminée par la forme des mâchoires et des ergots.

La plaque de clapet est maintenu dans son logement par la pièce suivante, par exemple par le corps de pompe qui peut présenter une surface s'appuyant contre les mâchoires de sorte à empêcher toute sortie de la plaque de son logement. Le montage ultérieur du corps de pompe assure ainsi le blocage de la plaque dans le sens axial. De la sorte, celle-ci se trouve maintenue, dans le sens orthoradial par le fond des mâchoires. Elle est maintenue dans le sens axial d'une part par le fond 46 des mâchoires, et d'autre par le corps de pompe. Dans le sens radial, la plaque est maintenue par les ergots de positionnement.

On notera que le montage de la plaque n'implique aucun réglage ni aucune vérification de la position de la plaque. L'invention assure ainsi une bonne reproductibilité des paramètres de fonctionnement du clapet, qui ne sont déterminés que par les caractéristiques intrinsèques des pièces formant le clapet, et pas par la façon dont ces pièces sont montées. Le choix de la pression de fermeture du clapet dépend des caractéristiques de la pompe dans laquelle il doit être monté. Cette pression dépend notamment de la cambrure de la plaque, de la distance entre la plaque et le siège en l'absence de sollicitation, de la surface de la plaque, et de l'élasticité du matériau choisi. Cette pression peut facilement être déterminée expérimentalement, en disposant un manomètre sur la tuyauterie de refoulement, et en relevant la valeur de pression pour laquelle le clapet se referme. Dans une pompe multi-étages du type de celle de la figure, la pression de fermeture du clapet est de l'ordre de 12 m de colonne d'eau. Le clapet est ouvert pour des pressions du côté plaque qui sont inférieures à cette valeur.

Le fonctionnement de la pompe présentant le clapet de l'invention est identique à celui d'une pompe autoamorçante connue. Toutefois, les valeurs de pression pour lesquelles le clapet s'ouvre et se ferme sont mieux déterminées.

Le clapet de l'invention peut avantageusement être utilisé dans une pompe autoamorçante horizontale à orifice d'aspiration axial, du type décrit dans la demande de brevet déposée le même jour par la demanderesse sous le titre "Pompe horizontale autoamorçante à orifice axial". Cette pompe présente une cellule d'aspiration montée entre le dernier corps d'étage et le corps de pompe, dont un flasque présente dans sa partie supérieure un orifice. Le flasque son orifice d'aspiration permettent de disposer l'orifice d'aspiration du corps de pompe non seulement dans la partie supérieure du corps de pompe, mais n'importe où sur celui-ci, et par exemple dans l'axe de la pompe.

Bien entendu, la présente invention n'est pas limitée aux exemples et modes de réalisation décrits et représentés, mais elle est susceptible de nombreuses variantes accessibles à l'homme de l'art. Dans les exemples des figures, le clapet est décrit dans une pompe horizontale, dans laquelle il est disposé sur le dernier corps d'étage. Il pourrait aussi être utilisé dans une pompe autoamorçante verticale, ou être disposé dans une autre position dans la pompe.

Dans le mode de réalisation préféré, la pompe est une pompe multi-étages, avec cinq étages composés chacun d'un corps d'étage et d'une roue. L'invention s'applique aussi à des pompes présentant une configuration différente, et par exemple à des pompes présentant une seule roue.

Dans toute la description, le liquide refoulé par la pompe est de l'eau. L'invention s'applique aussi pour des pompes destinées à refouler d'autres liquides. Dans le mode de réalisation des figures, le support de clapet présente deux ergots de positionnement; le nombre et la forme des ergots de positionnement peuvent varier.

Dans les modes de réalisation préférés décrits ci-dessus sont prévus des ergots de positionnement. On peut aussi réaliser l'invention sans ces ergots, notamment dans le cas d'une plaque métallique. Dans un tel cas, les caractéristiques de la plaque suffisent pour assurer son positionnement. Un positionnement encore plus précis peut en tout état de cause être obtenu à l'aide d'ergots de positionnement.

Le clapet d'amorçage a été décrit dans son application préférée pour l'amorçage d'une pompe. Il s'applique aussi à d'autres utilisations pour lesquelles un clapet ouvert au repos est nécessaire. Il faut donc entendre par clapet d'amorçage un clapet ouvert au repos.

## Revendications

1. Un clapet d'amorçage, comprenant un support de clapet présentant un alésage de clapet (30) et des mâchoires (38, 39), ainsi qu'une plaque (44) en matériau élastique maintenue par ses extrémités dans les mâchoires, la plaque en l'absence de sollicitation présentant une cambrure qui l'écarte du siège (31) de l'alésage (30).

2. Le clapet selon la revendication 1, **caractérisé par** un jeu (45) entre le fond des mâchoires et les extrémités de la plaque.

3. Le clapet selon la revendication 1 ou 2, **caractérisé en ce que** le siège (31) présente une forme cylindrique.

4. Le clapet selon la revendication 1, 2 ou 3, **caractérisé en ce que** le support de clapet présente au moins un ergot de positionnement (42, 43) de la plaque sur sa face opposée à l'alésage de clapet.

5. Le clapet selon l'une des revendications 1 à 4, **caractérisé en ce que** les ouvertures des mâchoires et l'ergot de positionnement sont disposés sur un cercle.

6. Le clapet selon l'une des revendications 1 à 5, **caractérisée en ce que** les mâchoires bloquent la plaque sur trois côtés.

7. Le clapet selon l'une des revendications 1 à 6, **caractérisé en ce que** la plaque est une plaque en caoutchouc, une plaque en acier, ou une plaque en plastique.

8. Une pompe autoamorçante comprenant un clapet selon l'une des revendications 1 à 7.

9. La pompe selon la revendication 8, **caractérisée en ce qu'**elle comprend une pièce adjacente au support de clapet, la dite pièce comprenant une surface bloquant la plaque dans les mâchoires.

10. La pompe selon la revendication 9, **caractérisée en ce que** le support de clapet est ménagé sur un corps d'étage, et **en ce que** la dite pièce est un corps de pompe, ou une cellule d'aspiration adjacent au corps d'étage.

11. Un support de clapet d'amorçage pour une pompe autoamorçante, comprenant un alésage de clapet (30) et des mâchoires (38, 39), dans lequel les ouvertures des mâchoires sont disposés sur une ligne courbe, de préférence sur un cercle, les mâchoires étant adaptées à maintenir une plaque (44) en matériau élastique par ses extrémités, la plaque en l'absence de sollicitation présentant une cambrure qui l'écarte de l'alésage (30).

12. Le support de clapet selon la revendication 11, **caractérisé en ce qu'**il présente en outre au moins un ergot de positionnement (42, 43), les ouvertures des mâchoires et l'ergot de positionnement étant disposés sur ladite ligne courbe.

13. Le support de clapet selon la revendication 11 ou 12, **caractérisé en ce que** le siège (31) présente une forme cylindrique.

## Patentansprüche

1. Rückschlagventil, umfassend einen Klappenträger, der eine Klappenbohrung (30) und Klemmen (38, 39) aufweist, sowie eine Platte (44) aus elastischem Material, die an ihren äußeren Enden in den Klemmen gehalten wird, wobei die Platte in Abwesenheit von Belastung eine Krümmung aufweist, die sie von Sitz (31) der Bohrung (30) beabstandet hält.

2. Klappe nach Anspruch 1, **gekennzeichnet durch** ein Spiel (45) zwischen dem Hintergrund der Klemmen und den äußeren Enden der Platte.

3. Klappe nach Anspruch 1 oder 2, **dadurch gekennzeichnet, dass** der Sitz (31) eine zylindrische Form aufweist.

4. Klappe nach Anspruch 1, 2 oder 3, **dadurch gekennzeichnet, dass** der Klappenträger mindestens einen Positionierungsnocken (42, 43) der Platte auf ihrer Außenseite gegenüber der Klappenbohrung aufweist.

5. Klappe nach einem der Ansprüche 1 bis 4, **dadurch gekennzeichnet, dass** die Öffnungen der Klemmen und der Positionierungsnocken auf einem Kreis angeordnet sind.

6. Klappe nach einem der Ansprüche 1 bis 5, **dadurch gekennzeichnet, dass** die Klemmen die Platte an drei Seiten festhalten.

7. Klappe nach einem der Ansprüche 1 bis 6, **dadurch gekennzeichnet, dass** die Platte eine Platte aus Kautschuk, eine Platte aus Stahl oder eine Platte aus Kunststoff ist.

8. Selbstansaugende Pumpe, umfassend eine Klappe nach einem der Ansprüche 1 bis 7.

9. Pumpe nach Anspruch 8, **dadurch gekennzeichnet, dass** sie ein Element umfasst, das an dem Klappenträger anliegt, wobei das Element eine Oberfläche umfasst, die die Platte in den Klemmen festhält.

10. Pumpe nach Anspruch 9, **dadurch gekennzeichnet, dass** der Klappenträger auf einem Etagenkörper vorgesehen ist und **dadurch** dass das Element ein Pumpenkörper oder eine an den Etagenkörper angrenzende Ansaugzelle ist.

11. Rückschlagventil-Träger für eine selbstansaugende Pumpe, umfassend eine Klappenbohrung (30) und Klemmen (38, 39), in dem die Öffnungen der Klemmen auf einer gekrümmten Linie, vorzugsweise auf einem Kreis, angeordnet sind, wobei die Klemmen dazu ausgelegt sind, eine Platte (44) aus elastischem Material an ihren äußeren Enden zu halten, wobei die Platte in Abwesenheit von Belastung eine Krümmung aufweist, die sie von der Bohrung (30) beabstandet hält.

12. Klappenträger nach Anspruch 11, **dadurch gekennzeichnet, dass** er ferner mindestens einen Positionierungsnocken (42, 43) aufweist, wobei die Öffnungen der Klemmen und der Positionierungsnocken auf der gekrümmten Linie angeordnet sind.

13. Klappenträger nach Anspruch 11 oder 12, **dadurch gekennzeichnet, dass** der Sitz (31) eine zylindrische Form aufweist.

## Claims

1. A priming valve, comprising a valve holder having a valve passage (30) and jaws (38, 39), as well as a valve plate (44) of an elastic material held by its end portions in said jaws, the plate, in the absence of forces acting thereon, having an inflection which distances it from the seat (31) of said passage (30).

2. The valve according to claim 1, **characterised by** a clearance (45) between the back or bottom of the jaws and the end portions of said valve plate.

3. The valve according to claim 1 or 2, **characterised in that** the valve seat (31) has a cylindrical shape.

4. The valve according to claim 1, 2 or 3, **characterised in that** the valve holder has at least one positioning lug (42, 43) for the valve plate on its face thereof opposite to the passage of the valve.

5. The valve according to one of claims 1-4, **characterised in that** the jaw openings and positioning lugs are arranged on a circle.

6. The valve according to one of claims 1-5, **characterised in that** the jaws block the valve plate on three sides.

7. The valve according to one of claims 1-6, **characterised in that** the plate is a plate of synthetic rubber material, sheet steel plate or a plate of plastic material.

8. A self priming pump comprising a valve according to one of claims 1-7.

9. The pump according to claim 8, **characterised in that** it comprises a member adjacent to the valve holder, said member having a surface that blocks the valve plate in the jaws.

10. The pump according to claim 9, **characterised in that** the valve holder is provided on a stage body and **in that** the said member is a pump body, or an inlet cell adjacent to the stage body.

11. A self priming valve holder for a self priming pump, comprising a valve plate passage (30) and jaws (38, 39) in which the opening of the jaws is arranged on a curved line, preferably on a circle, said jaws being adapted to maintain a valve plate (44) in elastic material at the end portions thereof, the valve plate, in the absence of forces acting thereon, having an inflection which distances it from said passage (30).

12. The valve holder according to claim 11, **characterised in that** it further has at least one positioning lug (42, 43), the openings of said jaws and the positioning lugs being arranged on said curved line.

13. The valve holder according to claim 11 or 12, **characterised in that** the valve seat (31) has a cylindrical shape.
